# EUROPÄISCHE PATENTSCHRIFT

(11) **EP 2 587 018 B1**
(45) Veröffentlichungstag und Bekanntmachung des Hinweises auf die Patenterteilung: **11.01.2017**
(21) Anmeldenummer: 12007258.2
(22) Anmeldetag: 22.10.2012
(51) Int. Cl.: F02B 37/12, F02B 37/18, F02B 37/24, F02B 37/00, F15B 11/042, F15B 11/064, F15B 11/068, F15B 15/00, G05D 7/06

(54) **Brennkraftmaschine**
Combustion engine
Moteur à combustion interne

(30) Priorität: 28.10.2011 DE 102011117308
(43) Veröffentlichungstag der Anmeldung: 01.05.2013
(73) Patentinhaber: Volkswagen Aktiengesellschaft, 38440 Wolfsburg (DE)
(72) Erfinder: Schlender, Robert, 10318 Berlin (DE)

(56) Entgegenhaltungen:
- EP-A2- 1 624 168
- WO-A1-02/086327
- DE-A1- 4 319 660
- DE-A1-102010 010 480
- DE-C1- 19 524 603

## Beschreibung

Die Erfindung betrifft eine Brennkraftmaschine mit den Merkmalen gemäß dem Oberbegriff des Anspruchs 1.

Die Verwendung von pneumatisch betriebenen Funktionselementen bei Brennkraftmaschinen von Kraftfahrzeugen ist bekannt. Beispielsweise können pneumatische Funktionselemente zur Verstellung der Turbine von sogenannten variablen Abgasturboladern eingesetzt werden. Weiterhin werden auch Regelklappen, mit denen die Strömung des Abgases über die Turbine des Abgasturboladers oder über einen die Turbine umgehenden Bypass gesteuert wird, pneumatisch betätigt, wozu ein entsprechendes Funktionselement erforderlich ist.

Im Dokument DE 195 24 603 C1 ist ein Verbrennungsmotor mit einer Abgasrückführung beschrieben, Ein pneumatisches Abgasrückführventil ist mit Druckluft aus einem Druckluftnetz zu betätigen. Die aus einem Reservoir stammende Druckluft kann mit einem Proportionalventil moduliert werden, so dass verschiedene Stellungen des Abgasrückführventils bewirkt werden können. Zusätzlich ist stromauf des Proportionalventils eine Umschalteinrichtung vorgesehen, damit unter anderem wahlweise der maximale Systemdruck des Reservoirs dem Abgasrückführventil zur dessen vollen Öffnung zugeführt werden kann,

Beispielsweise werden in den Dokumenten WO 02/086327 A1 und DE 43 19 660 A1 allgemein ohne Bezug auf Brennkraftmaschinen pneumatische Aktoren und deren Ansteuerung beschrieben. Unter anderem sind mehrere pneumatische Steuereinrichtungen parallel geschaltet und können sich gegenseitig umgehen.

Sowohl die Verstellung der Turbinen variabler Abgasturbolader als auch von Bypass-Regelklappen erfordert eine stufenlose oder zumindest in mehr als zwei Stufen abgestufte Verstellung. Für eine entsprechende Ansteuerung der pneumatischen Funktionselemente werden pneumatische Steuereinrichtungen eingesetzt, die auch als elektropneumatische Wandler (EPW) bekannt sind. Diese Steuereinrichtungen weisen zum einen eine Verbindung zu einem Unterdruckspeicher und zum anderen eine Verbindung zu dem Ansaugtrakt der Brennkraftmaschine auf. In Abhängigkeit von einem elektronischen Steuersignal "mischen" die elektronpneumatischen Wandler aus diesen "Druckquellen" dann einen Druck, der der gewünschten, dem Steuersignal entsprechenden Stellung des pneumatischen Funktionselements entspricht.

Im Zuge der mittlerweile weit verbreiteten Hubraumverkleinerung von Brennkraftmaschinen für Kraftfahrzeuge spielt eine Aufladung der Brennkraftmaschinen eine erhebliche Bedeutung. Über die Aufladung soll ein Leistungsverlust infolge der Hubraumverkleinerung kompensiert oder sogar überkompensiert werden. Dabei kommen zunehmend doppelt aufgeladene Brennkraftmaschinen zum Einsatz, bei denen beispielsweise ein Niederdruckabgasturbolader sowie ein Hochdruck-Abgasturbolader in Reihe geschaltet sind. Dabei werden die Turbinen der beiden Abgasturbolader nicht dauerhaft voll mit dem Abgasstrom beaufschlagt, sondern vielmehr in Abhängigkeit von dem jeweiligen Betriebszustand der Brennkraftmaschine einzeln oder beide in einem definierten Verhältnis angeströmt. Hierzu wird ein mittels einer Regelklappe gesteuerter Bypass für die Turbine des Hochdruck-Abgasturboladers vorgesehen, über den das Mengenverhältnis des die beiden Turbinen anströmenden Abgases stufenlos geregelt werden kann.

Eine Brennkraftmaschine mit doppelter Aufladung ist beispielsweise im Dokument DE 10 2010 010 480 A1 offenbart. Die Brennkraftmaschine umfasst einen ersten Abgasturbolader einer Niederdruckstufe und einen zweiten Abgasturbolader einer Hochdruckstufe, von denen mindestens eine der Turbinen der Abgasturbolader eine verstellbare Turbinengeometrie aufweist. Die Turbine der Hochdruckstufe ist stromauf der Turbine der Niederdruckstufe im Abgastrakt angeordnet, und der Verdichter der Niederdruckstufe ist stromauf der Turbine der Hochdruckstufe angeordnet. Des Weiteren weist die Brennkraftmaschine eine Hochdruckabgasrückführung mit Abgaskühler auf.

Bei einigen Betriebszustandsänderungen, beispielsweise bei einem schnellen Wechsel von geringer Teillast- zur Vollastanforderung der Brennkraftmaschine, ist eine schnelle Umsteuerung der Regelklappe zwischen ihren beiden Endpositionen (voll geschlossen und voll geöffnet) erforderlich. Die Geschwindigkeit, mit der diese Umsteuerung der Regelklappe erfolgt, hängt dabei maßgeblich von dem diese ansteuernden elektropneumatischen Wandler ab, der konstruktiv bedingt, das trägste Bauteil des pneumatischen Regelsystems ist. Eine zu langsame Umsteuerung resultiert dann in einer zeitlichen Verzögerung zwischen der Initiierung der Betriebszustandsänderung (durch das Niedertreten des Gaspedals) und der antriebstechnischen Umsetzung in Form eines geänderten Einsatzes der beiden Abgasturbolader. Dies wird von vielen Kraftfahrzeugführern negativ als ruckartige Fahrzustandsänderung bemerkt.

Ausgehend von diesem Stand der Technik lag der Erfindung die Aufgabe zugrunde, das Betriebsverhalten einer gattungsgemäßen Brennkraftmaschine zu verbessern. Insbesondere sollte bei einer doppelt aufgeladenen Brennkraftmaschine ein verzögertes Umschalten zwischen den einzelnen Abgasturboladern vermieden werden.

Diese Aufgabe wird durch den Gegenstand des unabhängigen Patentanspruchs 1 gelöst. Vorteilhafte Ausführungsformen der erfindungsgemäßen Brennkraftmaschine sind Gegenstand der abhängigen Patentansprüche und ergeben sich aus der nachfolgenden Beschreibung der Erfindung.

Die Erfindung beruht auf der Erkenntnis, dass eine pneumatischen Steuereinrichtung, die für die stufenlose Steuerung eines pneumatisch betriebenes Funktionselement vorgesehen ist, konstruktiv bedingt vergleichsweise träge agiert und dass diese Trägheit für die ruckartige Fahrzustandsänderung bei einem schnellen Wechsel von z.B. geringer Teillast- zur Vollastanforderung der Brennkraftmaschine, für die sowohl das pneumatische Funktionselement als auch die dieses steuernde pneumatische Steuereinrichtung zwischen ihren jeweiligen beiden Endstellung verstellt werden muss, verantwortlich ist. Die der Erfindung zugrunde liegende Idee beruht dann darauf, für diese Umschaltung des pneumatischen Funktionselements zwischen den beiden Endstellungen nicht die träge agierende pneumatische Steuereinrichtung vorzusehen, sondern diese vielmehr dann über einen Bypass zu umgehen. Hierzu ist der Bypass mit einer Schalteinrichtung versehen, über die der Bypass aktiviert (geöffnet) bzw. deaktiviert (geschlossen) wird. Eine solche Schalteinrichtung kann, da sie lediglich zwei Schaltstellungen hat, deutlich einfacher und damit auch schneller als die vorzugsweise stufenlos steuernde pneumatische Steuereinrichtung ausgebildet werden. Im Ergebnis kann somit die Trägheit der pneumatischen Steuereinrichtung umgangen werden, wenn das pneumatischen Funktionselement schnell zwischen seinen beiden Endpositionen umgeschaltet wird.

Die Steuereinrichtung ist elektrisch angesteuert. Vorzugsweise ist auch die Schalteinrichtung elektrisch angesteuert.

Derartige elektrisch angesteuerte Steuereinrichtungen bzw. Schalteinrichtungen sind unter den Begriffen elektropneumatische Wandler (EPW) bzw. elektrisches Umschaltventil (EUV) bekannt.

Bevorzugt kann es sich bei dem pneumatischen Funktionselement um eine Einrichtung zur Verstellung (insbesondere der Turbine) eines variablen Abgasturboladers handeln. Eine weiterhin bevorzugte Anwendung sieht vor, dass das Funktionselement ein Regelelement (insbesondere eine Regelklappe) zum definierten Freigeben/Verschließen des Öffnungsquerschnitts eines Bypasses zur Umgehung eines Abgasturboladers und insbesondere der Turbine eines Abgasturboladers ist.

Eine besonders bevorzugte Anwendung der Erfindung sieht vor, die Steuereinrichtung, über die eine Umschaltung zwischen zwei Abgasturboladern der Brennkraftmaschine gesteuert wird, erfingdungsgemäß bei Bedarf durch einen über eine Schalteinrichtung de-/aktivierbaren Bypass zu umgehen. Dazu kann die erfindungsgemäße Brennkraftmaschine zumindest zwei, jeweils eine Turbine aufweisende Abgasturbolader sowie ein entsprechendes Regelelement aufweisen, das das Verhältnis der Strömungen des Abgases über die Turbinen der beiden Abgasturbolader regelt. Für die dieses Regelelement steuernde Steuereinrichtung wird dann ein über eine Schalteinrichtung de-/aktivierbar Bypass vorgesehen.

Bei diesen beiden Turboladern handelt es sich vorzugsweise um einen Hochdruck-Abgasturbolader und einen Niederdruck-Abgasturbolader, die vorzugsweise in Reihe geschaltet sind. Das Regelelement ist dann in einen die Turbine des Hochdruck-Abgasturboladers umgehenden Bypass integriert.

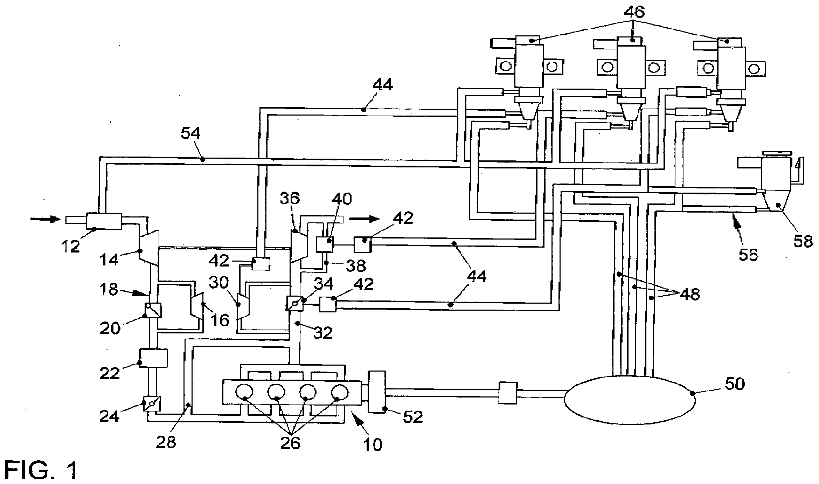

Die Erfindung wird nachfolgend anhand eines in der Zeichnung dargestellten Ausführungsbeispiels erläutert. In der Zeichnung zeigt
Fig. 1. eine erfindungsgemäße Brennkraftmaschine in einer schematischen Darstellung.

Die in der Fig. 1 dargestellte Brennkraftmaschine umfasst einen Verbrennungsmotor 10, der als vierzylindriger Hubkolben-Verbrennungsmotor ausgebildet ist. Der Verbrennungsmotor wird über eine Saugstrecke mit vorverdichteter Frischluft versorgt. Dazu wird aus der Umgebung angesaugt Frischluft zunächst über einen Luftfilter 12 geführt und dann von dem Verdichter 14 eines Niederdruck-Abgasturboladers vorverdichtet. Die von dem Verdichter 14 des Niederdruck-Abgasturboladers kommende Frischluft wird daraufhin entweder über einen Verdichter 16 eines Hochdruck-Abgasturboladers oder über einen den Verdichter 16 des Hochdruck-Abgasturboladers umgehenden Bypass 18 geführt. Das Verhältnis der über den Verdichter 16 des Hochdruck-Abgasturboladers und den Bypass 18 geführten Frischluft kann dabei stufenlos mittels einer Regelklappe 20 gesteuert werden. Die Frischluft wird dann in einem Ladeluftkühler 22 wieder heruntergekühlt und - über eine Drosselklappe 24 gesteuert - den von den Zylindern 26 des Verbrennungsmotors 10 ausgebildeten Brennräumen zugeführt.

In den Brennräumen wird ein Gemisch aus der Frischluft sowie in die Brennräume eingespritzten Kraftstoffs verbrannt. Das dabei entstehende Abgas wird über eine Abgasstrecke abgeführt. Direkt hinter dem Verbrennungsmotor 10 zweigt von der Abgasstrecke eine Abgasrückführleitung 28 ab, über die ein Teil des Abgases wieder in die Saugstrecke zurückgeleitet wird. Der verbliebene, größere Teil des Abgases wird dann entweder zur Erzeugung von Verdichterleistung über eine Turbine 30 des Hochdruck-Abgasturboladers oder über einen diese Turbine 30 umgehenden Bypass 32 geführt. Das Verhältnis des über die Turbine 30 und den Bypass 32 geführten Abgases wird wiederum über eine in den Bypass 32 integrierte Regelklappe 34 geregelt.

Das über die Turbine 32 des Hochdruck-Abgasturboladers bzw. über dessen Bypass 30 geführte Abgas wird daraufhin einer Turbine 36 des Niederdruck-Abgasturboladers zugeführt, wo dieses weiter entspannt wird und die dabei frei werdende Energie auf den Verdichter des Niederdruck-Abgasturboladers übertragen wird. Das aus der Turbine 36 des Niederdruck-Abgasturboladers abgeführte Abgas wird schließlich einer Nachbehandlung mittels Katalysatoren und Filtern (nicht dargestellt) unterzogen und dann in die Atmosphäre ausgeblasen. Auch für die Turbine 36 des Niederdruck-Abgasturboladers ist ein Bypass 38 vorgesehen, der über eine Regelklappe 40 steuerbar ist. Dieser Bypass 38 dient als sogenanntes "Wastegate", über das ein zu hoher über die Turbine des Niederdruck-Abgasturboladers geführter Mengenstrom und ein daraus folgender zu hoher Abgasgegendruck vermieden werden soll.

Sowohl die Regelklappe 40 des Bypasses für die Turbine 36 des Niederdruck- als auch die Regelklappe 34 des Bypasses 32 für die Turbine 30 des Hochdruck-Abgasturboladers wird pneumatisch betätigt. Hierzu sind beide Regelklappen 34, 40 mit einer Steuerleitung 44 verbunden, über die eine pneumatische Verstellvorrichtung 42 der jeweiligen Regelklappe 34, 40 mit einem definierten pneumatischen Druck beaufschlagt wird. Dieser Druck wirkt jeweils gegen eine von einer Feder (nicht dargestellt) aufgebrachte Gegenkraft und sorgt dadurch für die gewünschte Stellung der jeweiligen Regelklappe 34, 40.

Der Steuerdruck in den beiden Steuerleitungen 44 wird von jeweils einer pneumatischen Steuereinrichtung in Form eines elektropneumatischen Wandlers 46 zur Verfügung gestellt. Diese elektropneumatischen Wandler 46 setzen ein elektrisches Steuersignal, das von einer Motorsteuerung (nicht dargestellt) der Brennkraftmaschine bereit gestellt wird, in den entsprechenden pneumatischen Steuerdruck (Unterdruck definierter Höhe) in den Steuerleitungen 44 um. Hierzu ist jeder der elektropneumatischen Wandler 46 zum einen über eine Unterdruckleitung 48 mit einem Unterdruckspeicher 50 verbunden. Der weitgehend konstant vorgehaltene Unterdruck in dem Unterdruckspeicher 50 wird von einer Unterdruckpumpe 52 erzeugt, die direkt von einer Kurbelwelle des Verbrennungsmotors 10 angetrieben wird. Zum anderen wird jeder der elektropneumatischen Wandler 46 über eine Druckleitung 54 mit von dem Luftfilter 12 gereinigter Frischluft mit annähernd atmosphärischem Druck versorgt. Durch ein gesteuertes Belüften des jeweiligen über die Unterdruckleitung 48 entlüfteten elektropneumatischen Wandlers 46 kann dann der geforderte Steuerdruck eingestellt werden.

Der Hochdruck-Abgasturbolader ist als variabler Abgasturbolader ausgebildet, d.h. dessen Turbine 30 ist mit verstellbaren Leitschaufeln versehen, über die die Anströmung der Turbinenschaufein veränderbar ist. Die Verstellung der Leitschaufeln erfolgt ebenfalls pneumatisch, wobei die entsprechende pneumatische Verstellvorrichtung 42 ebenfalls über eine Steuereinleitung 44 von einem elektropneumatischen Wandler 46 mit dem jeweils passenden Steuerdruck beaufschlagt wird. Auch dieser elektropneumatische Wandler 46 ist über eine Unterdruckleitung 48 mit dem Unterdruckspeicher 50 und über die Druckleitung 54 mit dem Luftfilter 12 verbunden.

Bel der erfindungsgemäßen Brennkraftmaschine ist vorgesehen, das aus dem Verbrennungsmotor 10 austretende Abgas in Abhängigkeit von dem jeweiligen Betriebszustand des Verbrennungsmotors 10, der insbesondere durch die Drehzahl und die angeforderte Last (definiert durch die eingespritzte Kraftstoffmenge) abhängt, mehr oder weniger über die Turbine 30 des Hochdruck-Abgasturboladers zu führen. Dies wird durch eine entsprechende slufenlose Verstellung der Regelklappe 34 des die Turbine 30 des Hochdruck-Abgasturboladers umgehenden Bypasses 32 gesteuert. In bestimmten Betriebszustandsänderungen, insbesondere bei einer Beschleunigung unter hoher bzw. Volllast, kann eine möglichst schnelle Umschaltung (ohne Zwischenstufen) zwischen den beiden Endpositionen der Regelklappe 34 (vollständig geöffnet und vollständig geschlossen) erforderlich sein, um eine ruckartige Fahrzustandsänderung eines mit der Brennkraftmaschine angetrieben Kraftfahrzeugs möglichst zu vermeiden. Für eine solche schnelle Verstellung der Regelklappe 34 ist der diese ansteuernde elektropneumatische Wandler 46 aus konstruktiven Gründen nur schlecht geeignet, da dieser zu träge agiert.

Erfindungsgemäß ist daher ein weiterer Bypass 56 vorgesehen, über den derjenige elektropneumatische Wandler 46, mit dem die Regelklappe 34 des die Turbine 30 des Hochdruck-Abgasturboladers umgehenden Bypasses 32 normalerweise angesteuert wird, umgehbar ist. Dazu schließt der Bypass 56 die zu dem entsprechenden elektropneumatischen Wandler 46 führende Unterdruckleitung 48 und die von diesem zu der entsprechenden Regelklappe (bzw. deren Verstelleinrichtung 42) führende Steuerleitung 44 kurz. Dieser Bypass 56 ist über eine Schalteinrichtung in Form eines elektrischen Umschaltventils 58 de-/aktivierbar. Dieses elektrische Umschaltventil 58 ist dadurch gekennzeichnet, dass es In Abhängigkeit von einem von der Motorsteuerung bereit gestellten Steuerungssignal den Bypass 56 entweder öffnet oder schließt. Dementsprechend wird die Regelklappe 34 des die Turbine 30 des Hochdruck-Abgasturboladers umgehenden Bypasses 32 bei Bedarf schnell mit dem vollen Unterdruck beaufschlagt. Da das elektrische Umschaltventil 58 nur zwei Schaltstellungen aufweist, kann dieses deutlich schneller reagierend ausgebildet werden, als dies derzeit bei den elektropneumatischen Wandlern 46 möglich ist

Selbstverständlich ist es möglich, durch eine entsprechende Ausgestaltung eines elektropneumatischen Wandlers, die Bypassfunktion auch in diesen selbst zu intergieren und dadurch auf ein separates elektrisches Umschaltventil zu verzichten. Dazu kann vorgesehen sein, dass eine für die (vorzugsweise) stufenlose Beaufschlagung des Funktionselements (Regeklappe) vorgesehene Komponente bedarfsweise durch eine interne Bypasskomponente umgangen wird.

### Bezugszeichenliste

- 10: Verbrennungsmotor
- 12: Luftfilter
- 14: Verdichter
- 16: Verdichter
- 18: Bypass
- 20: Regelklappe
- 22: Ladeluftkühler
- 24: Drosselklappe
- 26: Zylinder
- 28: Abgasrückführleitung
- 30: Turbine
- 32: Bypass
- 34: Regelklappe
- 36: Turbine
- 38: Bypass
- 40: Regelklappe
- 42: Verstellvorrichtung
- 44: Steuerleitung
- 46: elektronpneumatischer Wandler
- 48: Unterdruckleitung
- 50: Unterdruckspeicher
- 52: Unterdruckpumpe
- 54: Druckleitung
- 56: Bypass
- 58: elektrisches Umschaltventil

## Patentansprüche

1. Brennkraftmaschine mit zwei, jeweils eine Turbine (30, 36) aufweisenden Abgasturboladern einer Regeleinrichtung, die eine Strömung des Abgases über die Turbinen (30,36) der beiden Abgasturbolader regelt und zumindest ein pneumatisch betriebenes Funktionselement umfasst, wobei das Funktionselement durch einen elektropneumatischen Wandler (46) gesteuert wird, **gekennzeichnet durch** einen Bypass (56) zur Umgehung des elektropneumatischen Wandlers (46), welcher derart eingerichtet ist, dass eine von dem elektropneumatischen Wandler (46) zu dem Funktionselement führende Steuerleitung (44) mit einer zu dem elektropneumatischen Wandler (46) führenden Unterdruckleitung (48) kurzschließbar ist und welcher über eine Schalteinrichtung de-/aktivierbar ist.

2. Brennkraftmaschine nach Anspruch 1, **dadurch gekennzeichnet, dass** das einer der Abgasturbolader ein variabler Abgasturbolader ist und dass das Funktionselement eine Einrichtung zur Verstellung des variablen Abgasturboladers ist.

3. Brennkraftmaschine nach Anspruch 1, **dadurch gekennzeichnet, dass** das Funktionselement eine Regelklappe (34) eines Bypasses (32) zur Umgehung eines der Abgasturbolader ist.

4. Brennkraftmaschine nach Anspruch 1, **dadurch gekennzeichnet, dass** einer der Abgasturbolader als Hochdruck-Abgasturbolader und ein zweiter als Niederdruckabgasturbolader ausgebildet ist.

5. Brennkraftmaschine nach Anspruch 4, **dadurch gekennzeichnet, dass** die Turbinen (30, 36) des Hochdruck-Abgasturboladers und des Niederdruck-Abgasturboladers in Reihe geschaltet sind und die Regeleinrichtung als Bypass (32) für die Turbine (30) des Hochdruck-Abgasturboladers ausgebildet ist.

6. Brennkraftmaschine nach einem der vorhergehenden Ansprüche, **dadurch gekennzeichnet, dass** die Schalteinrichtung ein elektrisches Umschaltventil (58) ist.

## Claims

1. Internal combustion engine having two exhaust gas turbochargers which each have a turbine (30, 36), a regulating device which regulates a flow of the exhaust gas via the turbines (30, 36) of the two exhaust gas turbochargers, and comprises at least one pneumatically operated functional element, wherein the functional element is controlled by means of an electropneumatic transducer (46), **characterized by** a bypass (56) for bypassing the electropneumatic transducer (46) which is configured in such a way that a control line (44) leading from the electropneumatic transducer (46) to the functional element can be short-circuited with an underpressure line (48) leading to the electropneumatic transducer (46), which electropneumatic transducer (46) can be deactivated/activated by means of a switching device.

2. Internal combustion engine according to Claim 1, **characterized in that** one of the exhaust gas turbochargers is a variable exhaust gas turbocharger, and **in that** the functional element is a device for adjusting the variable exhaust gas turbocharger.

3. Internal combustion engine according to Claim 1, **characterized in that** the functional element is a regulating flap (34) of a bypass (32) for bypassing one of the exhaust gas turbochargers.

4. Internal combustion engine according to Claim 1, **characterized in that** one of the exhaust gas turbochargers is embodied as a high-pressure exhaust gas turbocharger, and a second is embodied as a low-pressure exhaust gas turbocharger.

5. Internal combustion engine according to Claim 4, **characterized in that** the turbines (30, 36) of the high-pressure exhaust gas turbocharger and of the low-pressure exhaust gas turbocharger are connected in series, and the regulating device is embodied as a bypass (32) for the turbine (30) of the high-pressure exhaust gas turbocharger.

6. Internal combustion engine according to one of the preceding claims, **characterized in that** the switching device is an electric switching valve (58).

## Revendications

1. Moteur à combustion interne comprenant deux turbocompresseurs à gaz d'échappement présentant chacun une turbine (30, 36), un dispositif de régulation qui régule un écoulement du gaz d'échappement par le biais des turbines (30, 36) des deux turbocompresseurs à gaz d'échappement et qui comprend au moins un élément fonctionnel à commande pneumatique, l'élément fonctionnel étant commandé par un convertisseur électropneumatique (46), **caractérisé par** une dérivation (56) pour contourner le convertisseur électropneumatique (46), laquelle est prévue de telle sorte qu'une ligne de commande (44) conduisant depuis le convertisseur électropneumatique (46) à l'élément fonctionnel puisse être court-circuitée avec une conduite à dépression (48) conduisant au convertisseur électropneumatique (46) et laquelle peut être activée/désactivée par le biais d'un dispositif de commutation.

2. Moteur à combustion interne selon la revendication 1, **caractérisé en ce que** l'un des turbocompresseurs à gaz d'échappement est un turbocompresseur à gaz d'échappement variable et **en ce que** l'élément fonctionnel est un dispositif de réglage du turbocompresseur à gaz d'échappement variable.

3. Moteur à combustion interne selon la revendication 1, **caractérisé en ce que** l'élément fonctionnel est un clapet de régulation (34) d'une dérivation (32) pour contourner l'un des turbocompresseurs à gaz d'échappement.

4. Moteur à combustion interne selon la revendication 1, **caractérisé en ce que** l'un des turbocompresseurs à gaz d'échappement est réalisé sous forme de turbocompresseur à gaz d'échappement à haute pression et un deuxième est réalisé sous forme de turbocompresseur à gaz d'échappement à basse pression.

5. Moteur à combustion interne selon la revendication 4, **caractérisé en ce que** les turbines (30, 36) du turbocompresseur à gaz d'échappement à haute pression et du turbocompresseur à gaz d'échappement à basse pression sont montées en série et le dispositif de régulation est réalisé sous forme de dérivation (32) pour la turbine (30) du turbocompresseur à gaz d'échappement à haute pression.

6. Moteur à combustion interne selon l'une quelconque des revendications précédentes, **caractérisé en ce que** le dispositif de commutation est une soupape d'inversion électrique (58).
